# EUROPEAN PATENT SPECIFICATION

(11) **EP 0 790 623 B1**
(45) Date of publication and mention of the grant of the patent: **22.09.1999**
(21) Application number: 96102113.6
(22) Date of filing: 13.02.1996
(51) Int. Cl.: H01B 3/04, H01B 3/00

(54) **Sandwich insulation for increased corona resistance**
Sandwich-Isolierung für verbesserten Korona-Schutz
Isolation sandwich pour une résistance améliorée à l'effet corona

(43) Date of publication of application: 20.08.1997
(73) Proprietor: GENERAL ELECTRIC CANADA, Inc., Mississauga, Ontario L5N 5P9 (CA)
(72) Inventor: Draper, Robert E., Peterborough, Ontario (CA); Jones, Paul G., Peterborough, Ontario (CA); Rehder, Robert H., Peterborough, Ontario (CA); Stutt, Michael, Peterborough, Ontario (CA)
(74) Representative: Rupprecht, Kay, Dipl.-Ing.

(56) References cited:
- CA-A- 2 130 161
- US-A- 4 259 398
- US-A- 4 273 825
- US-A- 4 332 836

## Description

This invention relates to an insulating material which comprises layers of insulating material in a sandwich type of construction. The layers of insulation are preferably a film of a polymeric material, which preferably contains a corona resistant material such as submicron sized alumina particles present in sufficient quantity to enhance the corona resistance of the polymeric material and a mica layer. The polymeric film (preferably a polyimide) is bonded to the mica paper layer by a suitable resin which will preferably be a polymeric material which itself may or may not contain a corona resistant material. The polymeric resin material is of such nature as to at least partially impregnate the mica paper film and to provide the necessary adhesive qualities to bond the mica paper and the polymeric film into a unitary laminated sheet or tape.

Insulating electrical conductors in electrical apparatus has undergone significant improvement since the development of the early machines of the nineteenth century. As demands were made to supply larger and more efficient machines for industrial and commercial application, the insulation systems employed by designers has evolved to provide more withstand strength and yet occupy less space in the machine. It is to be remembered that most electrical machines are made of an electrically conductive material, a magnetic material and an insulation system. Basically, the magnetic material and the electrical conducting material are the two active materials that determine the machine performance and output capability and the insulation is only present to assure that the electricity flows only in predetermined paths. Thus, the required insulation should occupy a minimum of space and yet provide the necessary insulation between adjacent electrical conductors, and between conductors and any adjacent materials which are at ground potential.

As the voltage ratings have been pushed to higher and higher levels, designers have had to look for ways to increase the gradients for electrical potentials in order that the insulation does not occupy an inordinate amount of space. Generally the resistance to heat flow through an insulating material varies linearly as the length of the path, thus, there are two significant reasons for keeping the thickness of insulation to a minimum. Thus the decrease in the resulting insulation thickness allows for improved thermal performance of the insulation.

In the past, electrical machines have traditionally used varnish, enamel compounds or glass wrap to coat individual conductors to supply the required primary strand or "turn to turn" insulation for individual conductors. In rotating machines especially, the above conductors are wound into coils, and each coil is provided with a second insulating medium, and this insulation takes the form of an insulating tape or wrapper wrapped around the group of individual conductors which have been formed into a predetermined shape to form a coil. The varnishes that functioned satisfactorily in the earlier lower voltage machines gradually were surpassed by enamels, and more recently by polymeric materials such as polyesters, polyesteramides, polyesteramideimides and polymides to mention only a few commercially available conductor coatings.

Coil insulation has evolved from cotton tape wrapped in layers in a lapped fashion to provide the necessary insulation to an asphaltic insulation which comprised lapping coils with a tape coated with a layer of mica flakes. The mica flakes provided an insulation resistance to a phenomena generally known as "corona" which tends to be more problematic as operating voltage levels of the rotating machines were increased.

For the individual conductors forming the coils, it is also advantageous to provide protection against corona deterioration of the insulation of individual conductors and thus, a corona resistant material is now routinely added to the polymeric conductor insulation. Canadian Patents 1,168,857 and 1,208,325 and US Patents 4,760,296 and 4,546,041 provide examples of the addition of various compounds such as submicron sized particles of alumina or silica to polymeric compositions used to coat individual conductors which may be advantageously used to enhance corona resistance of the conductor insulative coating. The addition of the particles of alumina or silica may also improve the heat transfer characteristics of the conductor insulation as well.

US Patents 4,399,191 and 4,399,190 relate to a thin insulating sheet of mica to which is melt-bonded to a polymer film or a porous polymer sheet. US patent 4,399,190 includes a prepreg resin for laminating the mica sheet to the polymer film.

The taped insulation applied to the coils has undergone evolutionary changes as well. Gradually, glass fiber tapes came to be used as a carrier for mica flakes and a host of polymeric materials were used to provide the adhesive forces necessary to keep the flakes of mica in place on the tape. The coil was wound by conventional lap winding techniques and subsequently placed in a coil forming device and a vacuum-pressure-impregnating (VPI) process was employed to impregnate the taped coil with a suitable insulation material such as an uncured polymeric material to fill all the voids and interstices in the lapped insulation, and the coil was heated to cure the composite coil and insulation by a polymerization process.

An alternative process for insulating coils of electric machines is to wind the coil or strands with a layered tape which has been liberally covered with a "B" stage polymeric resin in a standard lapping fashion, until the desired number of laps have been applied to the coil or strand and then apply heat and pressure to the coil or strand to drive the polymeric material to gelation.

It will be found that during the heating and pressing operation, that the viscosity of the "B" stage polymeric material will initially drop and any excess resin will be squeezed from the coil by the press employed to give the coil its final shape.

The resin rich tape described above will no doubt have as one of its constituents in one form or another flakes of mica to give the required insulative capability.

It as the function of the flakes of mica to improve the corona resistance of the secondary insulation as well as maintain a good heat transfer characteristic of the secondary insulation.

As time went by, combinations of glass fiber, polymeric films, mica flakes or mica paper (a film composed of flakes of mica made in a process similar to the manufacture of paper) found their way into insulating tapes, and the taped coil was subsequently subjected to a VPI process or press curing process and cured to form a coil.

Problems arose in the use of certain tapes, because the polymeric films tend to prevent complete impregnation of the layers of insulating tape during the VPI process. This results in voids in the layers of insulation, and when subjected to a voltage stress, each void serves as a primary site for the initiation of corona.

Because of its nature, the sandwich type of insulation tape has proved to be an insulating material which is particularly adaptable to and susceptible to change. Mica in one form or another generally is found as one of the components of the sandwich.

Amongst the heat conducting, insulating materials available, aluminum oxide is well known for its superior insulating qualities and its excellent heat conducting qualities. Depending on the size of particles of aluminum oxide, its presence in the tape will enhance both the tape's heat conductivity and its corona resistance but the degree of enhancement is largely dependent on the particular size of the particles of alumina chosen. For purposes of this application, the primary interest is to improve the corona resistance of the insulating tape and thus the size of almina particle preferred is in the order of 0.1 micron or less.

Thus the sandwich type of insulation tapes has proved effective in providing superior insulation properties as applied to rotating electrical machinery. The voltage stress applied to a per unit thickness has undergone significant increase in the past and this means that the voltage rating of a particular machine may be increased for the same thickness of insulation. Use of heat conducting materials such as finely divided alumina, silica, beryllia, etc. have increased the thermal conductivity of the insulation, so that heat is able to flow more easily to the cooler parts of the machine so that current ratings of the coils may be subsequently increased.

Accompanying the improvement in voltage withstand stress has been a gradual improvement in resistance to corona breakdown of the insulation. This has enabled designers to reduce the thickness of the insulating layers over the years to the thicknesses present today.

Because of the stability of the polymeric materials in higher temperature environments, the thermal breakdown temperature of the insulating tapes has been constantly increased allowing machine performance and capability to be improved.

Lastly, it is important to examine the physical characteristics of an insulating tape that would adapt it for use in electric machines.

Since most coils are insulated by wrapping the coil with rolls of insulating tape, it becomes obvious that the tape must have tensile and wrapping strengths to permit it to be wrapped around the coil conductors without breaking under normal tension conditions. The tape must lie flat without bulges, etc. in the resultant layer of insulation.

The rolls of insulation should be amenable to a predetermined storage time, and at no time may any de-layering or delamination of any layers of the insulating tape be tolerated. Thus, it is imperative that the insulating tape possess the property to allow it to be easily unrolled without any damage to the tape as it is being unrolled, even after periods of storage. It is absolutely essential that the coil, after curing, be completely free of voids.

It is with the above objectives in mind that this invention has been made. Basically, this invention comprises a filled film material such as a polymeric material preferably materials such as polyester, polyesteramide, polyesteramideimide, polyamide, polyimide, polyamideimide, polycarbonate, polysulfone, or polyether will be found to be useful. These polymeric materials are preferably, filled with a finely divided material have corona resistant properties such as: boron nitride, aluminum nitride, silicon nitride, aluminum oxide, magnesium oxide, beryllium oxide, silicon oxide, zirconium oxide and titanium oxide to improve the life of the film in a voltage stressed environment. Throughout the balance of this description, these compounds will be understood to be the preferred corona resistant materials. Laminated to the polymeric is a mica paper of the type commercially available and previously described.

The mica paper is effectively laminated to the polymeric film by means of a polymeric resin which itself may be loaded with a corona resistant material. The resultant tape is amenable to unrolling from its rolled state, may be stored conveniently for reasonable periods of time without using difficult storage conditions. The voltage withstand strength and lifetime operability is considerably better than previous tapes of the glass fiber cloth tape - mica paper - polymeric film laminate employed previously.

In accordance with one aspect of the present invention there is provided an insulating material comprising a polymeric film, having a corona resistant material incorporated therein, and a layer of mica paper laminated thereto to form a composite layered insulating medium characterized in that:
the polymeric corona resistant material is selected from the group consisting of a polyester, a polyesteramide, a polyesteramideimide, a polyimide, a polyamide, a polyamideimide, a polyetherimide, a polycarbonate, a polysulfone, and a polyether, and the corona resistant material is filled up to a level of 40% by weight of the polymeric film with at least one compound having a particle size of less than 0.1 micron selected from the group consisting of boron nitride, aluminum nitride, silicon nitride, aluminum oxide, magnesium oxide, beryllium oxide, silicon oxide, zirconium oxide, and titanium oxide.

In accordance with another aspect of the present invention there is provided a composite layered tape insulating material having an approximate thickness of 240 m and comprising a layer of corona resistant polyimide material characterized by having a thickness of about 24 µm to which is laminated a layer of mica paper having a thickness of about 100 µm, the mica paper being at least partially impregnated with a suitable polymeric resin, and the insulating material (10) having a voltage withstand strength of about 13.8 volts per m for a period of at least 250 hours.
For a better understanding of the nature and objects of the present invention, reference may be had to the accompanying diagrammatic drawings in which:

Figure 1 is a perspective view showing the laminated tape of this invention.

Figure 2 is a simplified version of the apparatus used to accomplish this invention.

Figure 3 is a graph showing the improvement in performance of the insulation of this invention over the prior art insulation.

Referring now to the drawings, a tape 10 of this invention (much magnified) is shown. The tape is composed of a film of a polymeric material 12 in this instance CR*®KAPTON (a polyimide of DuPont) to which is bonded a film of mica paper 14. The two films are bonded together with a polymer resin suitable for this purpose.
*CR is generally taken to mean corona resistant

The film 12 of a polymeric material which maybe anyone of a selected group listed in the summary of the invention, but for the purpose of this description, the film preferred is CR KAPTON® because of its physical and electrical insulating properties. The corona resistance properties of any of the polymeric films are enhanced by the addition of finely divided particles of alumina to the film of particle size smaller than 0.1 micron. Particles of alumina of greater size than 0.5 micron up to 15 microns improve the thermal conductivity of the polymeric film. Typically, it would be preferred to have fumed alumina, silica, beryllia, etc. in a concentration of between 10-40% by weight of the polymeric film.

The mica paper is commercially available in a variety of thicknesfsses and as is well known in the art, is manufactured by a process which is very similar to the process employed for the manufacture of paper. It will be found that the physical properties of the mica paper are such that another material such as a glass fibre tape, or dacron or some other material having the desirable tensile strength and electrical voltage withstand capability has traditionally been bonded to the mica paper film. This invention preferably bonds the mica film to the polymeric film by means of an epoxy resin to provide the required bonding. Preferably, the polymeric resin may be any one of a selected group comprising epoxies, polyesters, silicone, bismaleide, or cyanate ester but for the purposes of this invention, applicants prefer to use epoxy. No matter which polymeric resin is chosen, its corona resistance may be enhanced by the addition of one of the compounds selected from, alumina, silica, beryllia, etc. in a very small particle size. The corona resistance will be improved by the addition of 10 to 40% of fumed alumina of a particle size less than 0.1 microns (see Canadian Patents 1,168,857 and 1,208,325). If it is desired to improve the heat transfer capabilities of the resin larger particles of the corona resistant materials above may be employed (See Canadian Patent #1,289,610).

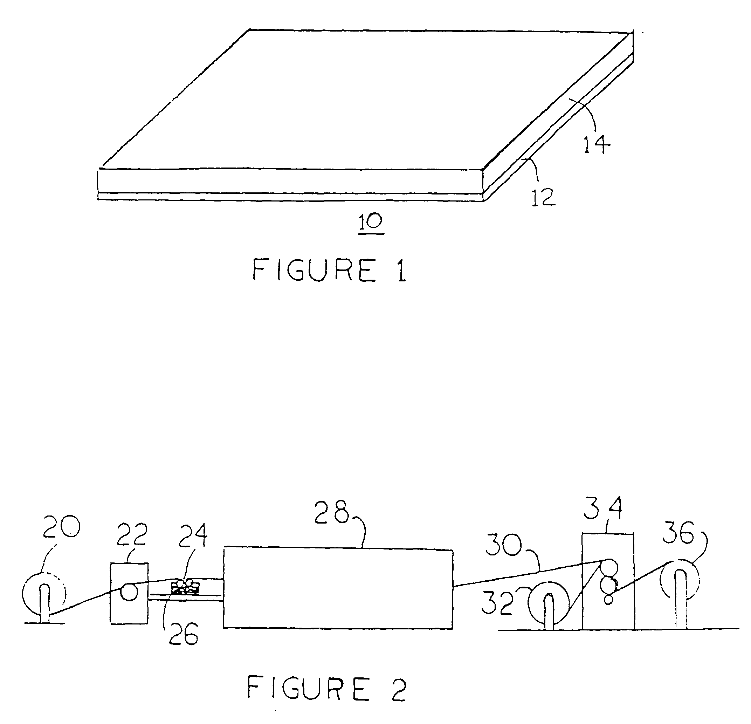

The product of Figure 1 may be manufactured in a number of ways but the apparatus of Figure 2 may be used to produce the laminated tape.

A roll of mica paper 20 of a predetermined width and thickness is provided for the beginning of the process. A layer of the mica paper is fed into guide rolls 22 and then over a coating device 24 where the underside of the layer is "kiss" coated with a solvent resin solution 26. The coated mica paper is then passed through an oven 28 where the solvent is driven off and the resin is impregnated into the mica paper.

The mica paper 30 now impregnated with the resin is mated with a film of CR®KAPTON which is fed from roll 32 to pressing device 34. The CR®KAPTON and the impregnated mica paper are bonded in device 34 to form a unitary laminated sandwich, which is subsequently rolled onto roll 36. The result is a spirally formed roll of a laminated sandwich type of insulation.

The strength of the resulting laminated tape is excellent, and if filled polyamide (KAPTON® is selected as the polymeric film 32, the electrical characteristics are superior. Because the laminated film is at least partially cured, the laminated tape roll may be conveniently stored in a cool dry environment and yet be capable of unrolling at a later date without experiencing damage due to layer to layer adhesion, or delamination.

The resulting laminate has excellent electrical and physical properties. Because the mica paper has been at least partially impregnated with corona resistant materials during the manufacturing process, any resultant coil manufactured using the laminated tape will already have corona resistant material incorporated into the layers of insulated tape and problems arising from voids in the VPI process are not as critical.

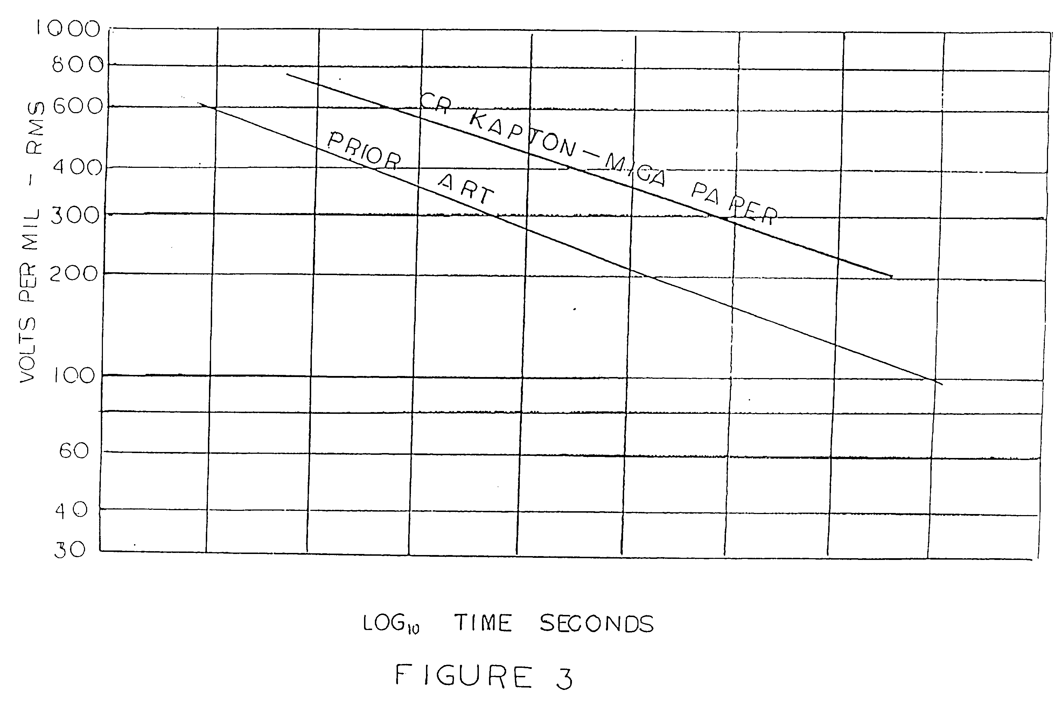

The results of laboratory tests for a laminated tape composed of CR®KAPTON and mica paper produced in accordance with the process previously described above is shown in Figure 3. It will be seen that the "withstand period" has been increased significantly for the CR®KAPTON - MICA PAPER laminate insulation.

It is, therefore, believed that the resultant physical and electrical qualities of the resultant tape make possible a more efficient electrical machine, because of the laminates superior characteristics. This gives the electrical designer more latitude in upgrading the ratings of existing machines undergoing remanufacture, and allows the production of a smaller machine to achieve the ratings of machines which of necessity with previous insulating systems were larger.

Because of the superior corona resistance of the laminated tape, the life of the machine, the coils of which are manufactured using the lapped tape of this invention will have an improved working life.

## Claims

1. An insulating material (10) characterized by a polymeric film (12), having a corona resistant material incorporated therein, and a layer of mica paper (14) laminated thereto to form a composite layered insulating medium, the medium characterized in that:
the polymeric film material (12) is selected from the group consisting of a polyester, a polyesteramide, a polyesteramide-imide, a polyimide, a polyamide, a polyamideimide, a poly-etherimide, a polycarbonate, a polysulfone, and a polyether, and the corona resistant material is filled in a quantity sufficient to enhance the corona resistance up to a level of 40% by weight of said polymeric film with at least one compound, having a particle size of less than 0.1 micron, selected from the group consisting of boron nitride, aluminum nitride, silicon nitride, aluminum oxide, magnesium oxide, beryllium oxide, silicon oxide, zirconium oxide, and titanium oxide.

2. The insulating material (10) of claim 1 characterized in that the composite layered insulating medium has a thickness of approximately 240 µm and has a voltage withstand strength of 13.6 volts per µm for a period of at least 250 hours.

3. The insulating material (10) of claim 1
characterized by the polymeric material being a polyimide having a thickness of about 24 µm to which is laminated the layer of mica paper (14) having a thickness of about 100 µm, the mica paper (14) being at least partially impregnated with a polymeric resin, and
said insulating material (10) having a voltage withstand strength of about 13.8 volts per µm for a period of at least 250 hours.

4. The insulating material (10) of claim 1 characterized by the mica paper being at least partially impregnated with a polymeric resin.

5. The insulating material (10) of claim 4 characterized by the polymeric resin being selected from the group consisting of: an epoxy, a polyester, a silicone, a bismaleimide, and a cyanate ester.

6. The insulating material (10) of claim 5 characterized by the polymeric resin containing up to 40% by weight of at least one of the compounds having a particle size of less than 0.1 micron selected from the group consisting of: boron nitride, aluminum nitride, silicon nitride, aluminum oxide, magnesium oxide, beryllium oxide, silicon oxide, zirconium oxide, and titanium oxide.

7. The insulating material (10) of claim 4 characterized by the polymeric resin containing up to 40% by weight of at least one of the compounds having a particle size of less than 0.1 micron selected from the group consisting of: boron nitride, aluminum nitride, silicon nitride, aluminum oxide, magnesium oxide, beryllium oxide, silicon oxide, zirconium oxide, and titanium oxide.

8. The method of insulating coils of an electric machine with a laminated tape (10) to be lapped about a bundle of conductors forming a coil, said tape characterized by:
a film of a corona resistant polyimide material (12) containing between 10 - 40% by weight of at least one compound selected from the group consisting of aluminum oxide powder and silicon oxide powder having a particle size of less than 0.1 microns, and
a layer of mica paper (14) having a thickness of about 100 m laminated to said polyimide material by means of a polymeric resin to produce a laminated tape, and the mica paper (14) being at least partially impregnated with said polymeric resin.

9. The method of claim 8 further characterized by said polymeric resin being selected from the group consisting of: an epoxy, a polyester, a silicone, a bismaleimide, and a cyanate ester, and the polymeric resin containing up to 40% by weight of at least one of the compounds having a particle size of less than 0.1 micron selected from the group consisting of: boron nitride, aluminum nitride, silicon nitride, aluminum oxide, magnesium oxide, beryllium oxide, silicon oxide, zirconium oxide, and titanium oxide.

## Patentansprüche

1. Isoliermaterial (10), gekennzeichnet durch einen Polymerfilm (12) mit einem darin enthaltenen koronafesten Material und einer Schicht aus Glimmerpapier (14), die auf diesem laminiert ist, um ein isolierendes Verbundschicht-Medium, zu bilden, dadurch gekennzeichnet, daß:
das polymere Filmmaterial (12) aus der ein Polyester, ein Polyesteramid, ein Polyesteramidimid, ein Polyimid, ein Polyamid, ein Polyamidimid, ein Polyetherimid, ein Polycarbonat, ein Polysulfon und ein Polyether enthaltenden Gruppe gewählt wird, und das koronafeste Material in einer ausreichenden Menge bis zu einem Anteil von 40 Gew.-% dieses Polymerfilmes zugesetzt wird und mindestens eine Substanz mit einer Partikelgröße unter 0,1 Mikron enthält, die aus einer Bornitrid, Aluminiumnitrid, Siliziumnitrid, Aluminiumoxid, Magnesiumoxid, Berylliumoxid, Siliziumoxid, Zirkonoxid und Titanoxid enthaltenden Gruppe gewählt wird.

2. Isoliermaterial (10) nach Anspruch 1, dadurch gekennzeichnet, daß das isolierende Verbundschicht-Medium eine Dicke von ca. 240 µm und eine Spannungsfestigkeit von 13,6 V pro µm über eine Zeitspanne von mindestens 250 Stunden hat.

3. Isoliermaterial (10) nach Anspruch 1, gekennzeichnet durch das Polymermaterial, das ein Polyimid mit einer Dicke von ca. 24 µm ist, auf dem die Schicht Glimmerpapier (14) mit einer Dicke von ca. 100 µm laminiert ist, wobei das Glimmerpapier (14) zumindest teilweise mit einem Polymerharz imprägniert ist, und
das Isoliermaterial (10), das eine Spannungsfestigkeit von ca. 13,8 V pro µm über eine Zeitspanne von mindestens 250 Stunden hat.

4. Isoliermaterial (10) nach Anspruch 1, gekennzeichnet durch das Glimmerpapier (14), das zumindest teilweise mit einem Polymerharz imprägniert ist.

5. Isoliermaterial (10) nach Anspruch 4, gekennzeichnet durch das Polymerharz, das aus der Gruppe gewählt wird, die folgendes umfaßt: ein Epoxyd, ein Polyester, ein Silikon, ein Bismaleimid und ein Cyanatester.

6. Isoliermaterial (10) nach Anspruch 5, gekennzeichnet durch das Polymerharz, das bis zu 40 Gew.-% mindestens einer der Substanzen mit einer Partikelgröße unter 0,1 Mikron enthält, die aus der folgendes umfassenden Gruppe gewählt wird: Bornitrid, Aluminiumnitrid, Siliziumnitrid, Aluminiumoxid' Magnesiumoxid, Berylliumoxid, Siliziumoxid, Zirkonoxid und Titanoxid.

7. Isoliermaterial (10) nach Anspruch 4, gekennzeichnet durch das Polymerharz, das bis zu 40 Gew.-% mindestens einer der Substanzen mit einer Partikelgröße unter 0,1 Mikron enthält, die aus der folgendes umfassenden Gruppe gewählt wird: Bornitrid, Aluminiumnitrid, Siliziumnitrid, Aluminiumoxid, Magnesiumoxid, Berylliumoxid, Siliziumoxid, Zirkonoxid und Titanoxid.

8. Verfahren zum Isolieren von Spulen einer elektrischen Maschine mit einem laminierten Band (10), das um ein eine Spule bildendes Leiterbündel in Schleifen gewickelt wird, wobei dieses Band gekennzeichnet ist durch:
einen Film aus koronafestem Polyimidmaterial (12), das zwischen 10 und 40 Gew.-% mindestens einer Substanz enthält, die aus der Aluminiumoxidpulver und Siliziumoxidpulver mit einer Partikelgröße unter 0,1 Mikron umfassenden Gruppe gewählt wird, und
eine Schicht Glimmerpapier (14) mit einer Dicke von ca. 100 µm, die mittels eines Polymerharzes auf das Polyimidmaterial laminiert wird, um ein laminiertes Band zu erzeugen, wobei das Glimmerpapier (14) mindestens teilweise mit dem Polymerharz imprägniert wird.

9. Verfahren nach Anspruch 8, des weiteren qekennzeichnet durch das Polymerharz, das aus der folgendes enthaltenden Gruppe gewählt wird: ein Epoxyd, ein Polyester, ein Silikon, ein Bismaleimid und ein Cyanatester, und das Polymerharz bis zu 40 Gew.-% mindestens einer der Substanzen mit einer Partikelgröße unter 0,1 Mikron enthält, die aus der folgendes enthaltenden Gruppe gewählt wird: Bornitrid, Aluminiumnitrid, Siliziumnitrid, Aluminiumoxid, Magnesiumoxid, Berylliumoxid, Siliziumoxid, Zirkonoxid und Titanoxid.

## Revendications

1. Matière isolante (10) caractérisée en ce qu'elle comprend un film de polymère (12) dans lequel est incorporée une matière résistante à l'effet corona, et une couche de papier de mica (14) stratifiée sur celui-ci, pour former un matériau composite isolant stratifié, ce matériau étant caractérisé en ce que :
la matière du film de polymère (12) est choisie parmi un polyester, un polyesteramide, un polyesteramideimide, un polyimide, un polyamide, un polyamideimide, un polyétherimide, un polycarbonate, une polysulfone et un polyéther, et la matière résistante à l'effet corona est chargée en quantité suffisante de façon à augmenter la résistance à l'effet corona à raison de jusqu'à 40 % du poids dudit film de polymère, avec au moins un composé ayant une taille particulaire inférieure à 0,1 micron, choisi parmi le nitrure de bore, le nitrure d'aluminium, le nitrure de silicium, l'oxyde d'aluminium, l'oxyde de magnésium, l'oxyde de béryllium, l'oxyde de silicium, l'oxyde de zirconium et l'oxyde de titane.

2. Matériau isolant (10) selon la revendication 1, caractérisé en ce que le matériau isolant composite stratifié a une épaisseur d'environ 240 µm, et une tension admissible de 13,6 V par µm pendant au moins 250 h.

3. Matériau isolant (10) selon la revendication, caractérisé en ce que la matière polymère consiste en un polyimide ayant une épaisseur d'environ 24 µm sur lequel est stratifiée la couche de papier de mica (14) ayant une épaisseur d'environ 100 µm, le papier de mica (14) étant au moins partiellement imprégné avec une résine de polymère, et ledit matériau isolant (10) ayant une tension admissible d'environ 13,8 V par µm pendant une période d'au moins environ 250 h.

4. Matériau isolant (10) selon la revendication 1, caractérisé en ce que le papier de mica est au moins partiellement imprégné avec une résine de polymère.

5. Matériau isolant (10) selon la revendication 4, caractérisé en ce que la résine de polymère est choisie parmi les résines époxy, de polyester, de silicone, dérivées de bismaléimide et d'ester de type cyanate.

6. Matériau isolant (10) selon la revendication 5, caractérisé en ce que la résine de polymère contient jusqu'à 40 % en poids d'au moins un des composés ayant une taille particulaire inférieure à 0,1 micron, choisis parmi le nitrure de bore, le nitrure d'aluminium, le nitrure de silicium, l'oxyde d'aluminium, l'oxyde de magnésium, l'oxyde de béryllium, l'oxyde de silicium, l'oxyde de zirconium et l'oxyde de titane.

7. Matériau isolant (10) selon la revendication 4, caractérisé en ce que la résine de polymère contient jusqu'à 40 % en poids d'au moins l'un des composés ayant une taille particulaire inférieure à 0,1 micron, choisis parmi le nitrure de bore, le nitrure d'aluminium, le nitrure de silicium, l'oxyde d'aluminium, l'oxyde de magnésium, l'oxyde de béryllium, l'oxyde de silicium, l'oxyde de zirconium et l'oxyde de titane.

8. Procédé d'isolement des bobines d'une machine électrique à l'aide d'une bande stratifiée (10) destinée à être enroulée autour d'un faisceau de conducteur formant une bobine, ladite bande étant caractérisée en ce qu'elle comprend un film d'une matière de type polyimide résistante à l'effet corona (12) contenant de 10 à 40 % en poids d'au moins un composé choisi parmi une poudre d'oxyde d'aluminium et une poudre d'oxyde de silicium ayant une taille particulaire inférieure à 0,1 micron, et une couche de papier de mica (14) d'une épaisseur d'environ 100 µm, stratifiée sur ladite matière de type polyimide, à l'aide d'une résine de polymère pour produire une bande stratifiée, et le papier de mica (14) étant au moins partiellement imprégné de ladite résine de polymère.

9. Procédé selon la revendication 8, caractérisé en outre en ce que ladite résine de polymère est choisie parmi les résines époxy, de polyester, de silicone, dérivées de bismaléimide et d'un ester de type cyanate, et en ce que la résine de polymère contient jusqu'à 40 % en poids d'au moins l'un des composés ayant une taille particulaire inférieure à 0,1 micron, choisis parmi le nitrure de bore, le nitrure d'aluminium, le nitrure de silicium, l'oxyde d'aluminium, l'oxyde de magnésium, l'oxyde de béryllium, l'oxyde de silicium, l'oxyde de zirconium et l'oxyde de titane.
